(19) Europäisches Patentamt
European Patent Office
Office européen des brevets

(11) EP 4 152 244 B1

(12) **EUROPEAN PATENT SPECIFICATION**

(45) Date of publication and mention of the grant of the patent:
**25.02.2026 Bulletin 2026/09**

(21) Application number: **21804003.8**

(22) Date of filing: **28.04.2021**

(51) International Patent Classification (IPC):
***G06T 3/4053*** *(2024.01)* ***G06T 3/4046*** *(2024.01)*

(52) Cooperative Patent Classification (CPC):
**G06T 3/4053; G06N 3/0464; G06N 3/0475; G06N 3/09; G06N 3/094; G06T 3/4046**

(86) International application number:
**PCT/CN2021/090646**

(87) International publication number:
**WO 2021/227877 (18.11.2021 Gazette 2021/46)**

(54) **IMAGE SUPER-RESOLUTION PROCESSING METHOD, APPARATUS AND DEVICE, AND STORAGE MEDIUM**

VERFAHREN, VORRICHTUNG UND VORRICHTUNG ZUR BILDHOCHAUFLÖSUNGSVERARBEITUNG UND SPEICHERMEDIUM

PROCÉDÉ, APPAREIL ET DISPOSITIF DE TRAITEMENT DE SUPER-RÉSOLUTION D’IMAGE, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2020 CN 202010403330**

(43) Date of publication of application:
**22.03.2023 Bulletin 2023/12**

(73) Proprietor: **Sanechips Technology Co., Ltd.**
**Shenzhen, Guangdong 518055 (CN)**

(72) Inventors:
- **KONG, Dehui**
  **Shenzhen, Guangdong 518057 (CN)**
- **LIU, Hengqi**
  **Shenzhen, Guangdong 518057 (CN)**
- **XU, Ke**
  **Shenzhen, Guangdong 518057 (CN)**
- **YANG, Wei**
  **Shenzhen, Guangdong 518057 (CN)**
- **SONG, Jianjun**
  **Shenzhen, Guangdong 518057 (CN)**
- **ZHU, Fang**
  **Shenzhen, Guangdong 518057 (CN)**

(74) Representative: **Baudler, Ron**
**Canzler & Bergmeier**
**Patentanwälte Partnerschaft mbB**
**Despag-Straße 6**
**85055 Ingolstadt (DE)**

(56) References cited:
**CN-A- 102 208 103** **CN-A- 109 544 448**
**JP-A- 2007 190 413**

- **BINGZHE WU ET AL: "SRPGAN: Perceptual Generative Adversarial Network for Single Image Super Resolution", COMPUTER SCIENCE, CORNELL UNIVERSITY LIBRARY, 201 OLIN LIBRARY CORNELL UNIVERSITY ITHACA, NY 14853, 16 December 2017 (2017-12-16), pages 1 - 9, XP080846659**
- **CUI YIN ET AL: "Class-Balanced Loss Based on Effective Number of Samples", 2019 IEEE/CVF CONFERENCE ON COMPUTER VISION AND PATTERN RECOGNITION (CVPR), IEEE, 15 June 2019 (2019-06-15), pages 9260 - 9269, XP033686891, DOI: 10.1109/CVPR.2019.00949**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- DEHUI KONG: "BSR: A Balanced Framework For Single Image Super Resolution", 2020 ITU KALEIDOSCOPE: INDUSTRY-DRIVEN DIGITAL TRANSFORMATION (ITU K), 7 December 2020 (2020-12-07), pages 1 - 9, XP093157248, ISBN: 978-92-6-131391-3, DOI: 10.23919/ ITUK50268.2020.9303225
- "Financial time series analysis experiment tutorial", 31 August 2012, ISBN: 978-7-307-09741-4, article HU, LIQIN: "Passage; Financial time series analysis experiment tutorial", pages: 288 - 290, XP009531862
- MIAO JUN, JUN CHU, ZHANG GUI-MEI, LU WANG: "Dense Multi-planar Scene Reconstruction from Sparse Point Cloud", ACTA AUTOMATICA SINICA, KEXUE CHUBANSHE, BEIJING, CN, vol. 41, no. 4, 30 April 2015 (2015-04-30), CN , pages 813 - 822, XP055867439, ISSN: 0254-4156, DOI: 10.16383/j.aas.2015.c140279
- LAI WEI-SHENG; HUANG JIA-BIN; AHUJA NARENDRA; YANG MING-HSUAN: "Deep Laplacian Pyramid Networks for Fast and Accurate Super-Resolution", 2017 IEEE CONFERENCE ON COMPUTER VISION AND PATTERN RECOGNITION (CVPR), IEEE COMPUTER SOCIETY, US, 21 July 2017 (2017-07-21), US , pages 5835 - 5843, XP033249944, ISSN: 1063-6919, DOI: 10.1109/CVPR.2017.618

**Description**

TECHNICAL FIELD

The present disclosure relates to, and is not limited to, the technical field of computers.

BACKGROUND

The super-resolution reconstruction technology based on deep learning shows apparent advantages over traditional methods in the comparison of reconstruction effects. Currently, the mainstream of super-resolution reconstruction methods is beginning to move closer to deep learning.

Currently, super-resolution methods based on deep neural networks are divided into two categories, one is based on a generative adversarial network (GAN) and the other one is based on a supervised full convolutional neural network. In order to make the discriminator unable to discriminate between a generated image and a real image, the former, by using the perception machine cost function under the GAN network framework, makes output results located in a high-level space where the ground truth (GT) is located. In order to identify a low-resolution and high-resolution pair (LHP) the supervised method generates the LHP, through a determined degradation model and responsible network structure modeling.

The paper by Bingzhe Wu et al., "SRPGAN: Perceptual Generative Adversarial Network for Single Image Super Resolution", 2017, arXiv:1712.05927 relates to a super resolution perceptual generative adversarial network (SRPGAN) framework for SISR tasks. In the framework, a robust perceptual loss based on the discriminator of the built SRPGAN model has been proposed. The method uses the Charbonnier loss function to build the content loss and combines it with the proposed perceptual loss and the adversarial loss.

SUMMARY

The invention is set out in the appended set of claims.

The preceding embodiments and other aspects of the present disclosure and implementations thereof are described in more detail in the brief description of drawings, detailed description, and claims.

BRIEF DESCRIPTION OF DRAWINGS

FIG. 1 is flowchart of an image super-resolution processing method according to the present disclosure.

FIG. 1A is an architecture diagram of a deep neural network according to the present disclosure.

FIG. 1B is a training flowchart of a neural network model according to the present disclosure.

FIG. 2 is a structural diagram of an image super-resolution processing apparatus according to the present disclosure.

FIG. 3 is a structural diagram of a device according to the present disclosure.

DETAILED DESCRIPTION

Objects, solutions and advantages of the present disclosure will be more apparent from a detailed description of embodiments of the present disclosure in conjunction with the drawings. It is to be noted that if not in collision, the embodiments and features therein in the present disclosure may be combined with each other.

The steps illustrated in the flowcharts among the drawings may be performed by, for example, a computer system capable of executing a set of computer-executable instructions. Moreover, although logical sequences are illustrated in the flowcharts, the steps illustrated or described may be performed in sequences different from those described here in some cases.

As described above, currently, super-resolution methods based on deep neural networks are divided into two categories, one is based on a generative adversarial network, GAN, and another is based on a supervised full convolutional neural network. In order to make the discriminator unable to discriminate between a generated image and a real image, the former, by using the perception machine cost function under the GAN network framework, makes output results located in a high-level space where the ground truth, GT, is located. In order to identify a low-resolution and high-resolution pair, LHP, the supervised method generates the LHP, through a determined degradation model and responsible network structure modeling.

The two types of methods generally randomly cut each data set into fixed-size blocks and then combine multiple blocks into a sample set. The sample set is used as input to perform forward and back propagation in the network to update network parameters. These methods have a significant imbalance problem in natural images, mainly due to the fact that smooth regions occupy a relatively high proportion in statistics compared with various textures. That is, interference-free random sampling may bring more smooth regions of the network, resulting in the network being more prone to adopting LHPs of the smooth regions.

Accordingly, the present disclosure specifically provides an image super-resolution processing method and apparatus, a device, and a storage medium which substantively avoid one or more problems due to limitations and disadvantages of the existing art. According to an embodiment of the present disclosure, the problem of the proportion imbalance of output sampled samples in the existing art can be solved.

In an exemplary embodiment, FIG. 1 is flowchart of an image super-resolution processing method according to the present disclosure. The method can be applied to the case of performing super-resolution processing on low-resolution images to be processed. The method may be executed by an image super-resolution processing apparatus provided by the present disclosure. The image super-resolution processing apparatus may be implemented by software and/or hardware and integrated on a device.

As shown in FIG. 1, an image super-resolution processing method provided by the present disclosure includes step S110 and step S120.

In step S110, an image to be processed is acquired.

The image to be processed is a low-resolution image.

Exemplarily, the manner to acquire the image to be processed may be to collect the image to be processed through a camera, or to acquire the image to be processed through screenshot. This embodiment of the present disclosure does not limit the manner to acquire the image to be processed.

In step S120, super-resolution processing is performed on the to-be-processed image by a target neural network model. The target neural network model is obtained by iteratively training a pyramidal neural network model by using a target image sample set. Target image samples are obtained by filtering original image samples according to a plurality of intervals of a sample information content. The number of image samples in each interval of the sample information content is the same.

For a basic feature extraction module, the pyramidal neural network model implements the acquisition from shallow-layer features to high-layer features through multi-level cascading. It is to be noted that, by using the pyramidal network structure, on the one hand, bottom-layer features, middle-layer features, and high-layer features are reserved and can be participated in the preceding sampling process, and on the other hand, the stability of the network can be improved due to the multi-level hop connection. For the basic feature extraction module $\phi$, the acquisition from shallow-layer features to high-layer features is implemented through multi-level cascading. The basic feature extraction module may choose a residual network or a U-Net structure model. Features extracted by each module are used as the input of the next-level feature extraction. Finally, features of each layer are used as the input of an up-sampling module, as shown in the following formula: $Input : [\phi_0, \phi_1, ..., \phi_n]$ .

$\phi$ denotes the basic feature extraction module.

Exemplarily, FIG. 1A is an architecture diagram of a deep neural network in this embodiment of the present disclosure. A low-resolution image is input into a neural network model to obtain a high-resolution image. In the neural network model, shallow-layer feature extraction is performed first. The basic feature extraction module includes a basic feature extraction module $\phi_0$, a basic feature extraction module $\phi_1$... and a basic feature extraction module $\phi_n$. The feature extracted by each module is used as the input of the next-level feature extraction. Finally, the feature of each layer is used as the input of the up-sampling module.

In this embodiment of the present disclosure, the output of super-resolution reconstruction is not limited to the limited number of classification targets. The super-resolution reconstruction is different from a deep neural network for classification and identification. From the input/output dimension, super-resolution belongs to a many-to-many mapping process, as shown in the following formulas: $\Gamma: X \to q$ and $K : X \to Y$.

$\Gamma$ denotes a classification and identification network. X denotes an input image containing twodimensional information (grayscale image), three-dimensional information (for example, containing color information), or even four-dimensional information (for example, video containing color information). q denotes a scalar for target identification. q may denote a Boolean variable, and for multi-classification problems, q may denote a scalar of limited size. K denotes a super-resolution mapping relationship. Y denotes an output high-resolution result. In most cases, Y should maintain the same dimension as X, and the magnitude of Y in each dimension is not less than X, which can be regarded as an information expansion process. In terms of information dimension and effect improvement, K needs to pay more attention to all input information.

The traditional extraction of super-resolution input samples is to randomly select a batch of samples $\{a_0, a_1 ... , a_n\}$

from a sample set A, then randomly cut each sample $a_i$ , and finally perform data augmentation as needed and input the sample subjected to the data augmentation into the network for training. This manner simply migrates according to the classification and identification network and does not consider the similarity of X in the bottom-layer information. That is, most images contain large smooth regions (this phenomenon is more apparent in high-resolution images). Smooth regions have higher similarity. During the network training process, this similarity is manifested that an input end contains a higher proportion than other texture regions in statistics. This imbalance causes the super-resolution neural network to be more prone to outputting smooth results. This result violates the image information of the ground truth, resulting in the loss of some originally clear region details.

In the present invention, the target image samples are obtained by filtering original image samples according to intervals of a sample information content. That is, a filtering method is used to implement the balanced control of samples. An exemplary implementation may be using gradient information to represent the texture richness of samples, calculating Sobel gradient information for each image sample, summing the gradient information of the image samples, and using the summed result as the sample information content. Alternatively, an exemplary implementation may be using variance, because the variance can represent the degree of variation of samples, calculating the variance in each sample acquired randomly, and then filling the variance in the corresponding interval according to the value of the variance until the samples in each interval meet requirements. Since each sample is acquired in a random manner, the shuffle operation is used between each round of training. This can ensure the randomness of samples at the same time.

Exemplarily, the entire sample information content space corresponding to the target image sample set is divided to obtain at least one interval of the sample information content. Each interval has a start point and an end point of the sample information content. The number of samples in an interval is set for each interval. The sample information content of the original image samples is acquired. The intervals corresponding to the sample information content is determined according to the sample information content. After the corresponding interval is found, the number of samples in the space is acquired. If the number of samples does not reach the set number of samples, some samples in the corresponding interval are selected to the space. If the set number of samples is reached, no samples in the corresponding interval are selected.

Exemplarily, the target image samples are obtained after filtering the original image samples. The target neural network model is obtained by iteratively training a pyramidal neural network model by using a target image sample set. The target neural network model completed by training performs super-resolution processing on the image to be processed.

FIG. 1B is a training flowchart of a neural network model. Initial samples are first acquired from a training set. Next, samples are selected. A network model is trained according to the selected samples. Loss is calculated. Then, the neural network model is updated. The preceding steps are iteratively performed until a final model is obtained.

In the present disclosure, the image super-resolution processing method provided includes acquiring an image to be processed and performing super-resolution processing on the to-be-processed image through a target neural network model. The target neural network model is obtained by iteratively training a pyramidal neural network model by using a target image sample set. Target image samples are obtained by filtering original image samples according to intervals of a sample information content. The number of image samples in each interval of the sample information content is the same. The problem of the proportion imbalance of output sampled samples in the existing art is solved, effectively alleviating the bias of the network.

On the basis of the preceding embodiments, variant embodiments of the preceding embodiments are proposed. It is to be noted here that for ease of description, only differences from the preceding embodiments are described in the variant embodiments.

In one embodiment, iteratively training the pyramidal neural network model by using the target image sample set includes establishing the pyramidal neural network model; inputting low-resolution images in a target sample set into the pyramidal neural network to obtain predicted images; training parameters of the pyramidal neural network according to a target function formed by the predicted images and high-resolution images corresponding to the low-resolution images; and returning to perform the operation of inputting the low-resolution images in the target sample set into the pyramidal neural network to obtain the predicted images until a target neural network model is obtained. The target function includes one or more of a function $L2 + \alpha L1$, a function $L1 + \theta LP$, and a function $L2 + \mu L1 + \beta LP$. L2 is L2 norm. L1 is L1 norm. LP is LP norm. $\alpha$, $\theta$, $\mu$, and $\beta$ are weights of a regularization factor.

The L1 norm is $L1 = \sum_{i=1}^{n} |X_i|$ . The L2 norm is $L2 = \left(\sum_{i=1}^{n} X_i^2\right)^{1/2}$ . The LP norm is $Lp = \left(\sum_{i=1}^{n} X_i^p\right)^{1/p}$ . $X_i$ is the difference between the predicted images and the high-resolution images corresponding to the low-resolution images.

Specifically, when p is greater than 0 and less than 1, $X_i$ has a greater response under the LP norm. Therefore, using the LP norm as a target function can enable a smaller difference to output a larger loss, thereby improving the sensitivity of the network to small differences.

Specifically, training the parameters of the pyramidal neural network according to the target function formed by the predicted images and high-resolution images corresponding to the low-resolution images may be that the target function is the function L2 + αL1, L2 is the L2 norm, and L1 is the L1 norm; and L1 norm is $L1 = \sum_{i=1}^{n} |x_i|$; L2 norm is $L2 = \left(\sum_{i=1}^{n} x_i^2\right)^{1/2}$, and $X_i$ is the difference between the predicted images and the high-resolution images corresponding to the low-resolution images. Alternatively, the target function is the function L2 + αL1 initially. After the target function does not decrease significantly, the target function is the function L1 + θLP. LP is the LP norm. α and θ are weights of a regularization factor. LP norm is $Lp = \left(\sum_{i=1}^{n} x_i^p\right)^{1/p}$. $X_i$ is the difference between the predicted images and the high-resolution images corresponding to the low-resolution images. Alternatively, the target function is the function L2 + μL1 + βLP. μ and β are weights of a regularization factor. The approximation to the global optimization is implemented by adjusting the weights.

In one embodiment, training the parameters of the pyramidal neural network according to the target function formed by the predicted images and the high-resolution images corresponding to the low-resolution images includes training the parameters of the pyramidal neural network based on the target function L2 + αL1 and a learning rate set as a first value and, after the decrease of an output value of the target function is less than a predetermined value (that is, a predefined value), continuing training the parameters of the pyramidal neural network based on the target function L1 + θLP and a learning rate set as a second value. The second value is less than the first value. α and θ increase as the learning rate decreases. The decrease of the output value of the target function refers to the difference between the current output value of the target function and the previous output value of the target function.

The first value may be set to a larger learning rate. The second value may be set to a relatively small learning rate.

Specifically, the function L2 + αL1 is used as the target function in the initial stage of training, and a larger learning rate is used for training at the same time. After the target function does not decrease significantly, L1 + θLP is used as the target function, and training is performed at a relatively small learning rate.

In one embodiment, training the parameters of the pyramidal neural network according to the target function formed by the predicted images and the high-resolution images corresponding to the low-resolution images includes training the parameters of the pyramidal neural network according to the target function L2 + μL1 + βLP formed by the predicted images and the high-resolution images corresponding to the low-resolution images and, in each round of training or between two rounds of training, adjusting μ and β to implement the approximation to the global optimization.

Specifically, the L2 + μL1 + βLP norm constraint is selected globally as the target function. The approximation to the global optimization is implemented by dynamically adjusting weights of a regularization factor in each round of training or between two rounds of training.

This embodiment of the present disclosure relates to the setting of the target function and parameter adjustment during the training process. A multi-norm regularization method is used during the training process to improve the contribution to the non-significant texture portion. At the same time, the weights of a regularization factor are adjusted according to the convergence of the network during the training process. As a result, dynamical adjustment improves the convergence efficiency of the network on the one hand, and avoids the network falling into a minimum on the other hand, more effectively updating network hyperparameters using multi-norm regularization. In the existing art, the resolution method is low in stability and occasionally appears components or textures that are not contained in original images. Objective indexes (for example, peak signal-to-noise ratio, PSNR, and structural similarity, SSIM) of the method are relatively low. Generally, L2 norm or L1 norm is taken as the target function. Network training results under the function constraint generally have higher objective quality. In the case of pursuing quantization indexes, generally, the network complexity is greatly increased, and increased hashrate requirements bring limited effect improvement, not facilitating to the implementation at a deployment side. Moreover, the influence of the network structure and data is ignored due to the preference to promote depth. Compared with the current manner in which the L2 norm or the L1 norm is commonly used as a target function, this embodiment of the present disclosure uses the manner in which the LP norm is jointed simultaneously and dynamical adjustment during the training process is used to improve training convergence efficiency and attention to fine targets.

In one embodiment, the sample information content includes gradient information of image samples or variance in image samples.

The gradient information represents the texture richness of the image samples.

Specifically, the Sobel operator gradient information of each sample is calculated. The gradient information of the samples is summed. The summed result is used as the representation of the sample information content.

The variance in the image samples represents the degree of variation of the image samples.

Specifically, the variance in each sample acquired randomly is calculated as the representation of the sample information content.

In one embodiment, the sample information content is $PIC = \|\max(abs(Sobel(a_i[x, y, w, h])))\|_1$. $PIC$ denotes the sample information content. x and y denote the abscissa of the start point of a selected image sample and the ordinate of the start point of the selected image sample, respectively. w and h denote the width of the selected image sample and the height of the selected image sample, respectively. $a_i$ denotes the image sample. Sobel denotes the Sobel operator. max denotes the maximum value. abs denotes an absolute value. The abscissa and the ordinate may be coordinates in a Cartesian coordinate system.

In one embodiment, the sample information content is $PIC = \|\max(abs(Var(a_i[x, y, w, h])))\|_1$. *PIC* denotes the sample information content. x and y denote the abscissa of the start point of a selected image sample and the ordinate of the start point of the selected image sample, respectively. w and h denote the width of the selected image sample and the height of the selected image sample, respectively. $a_i$ denotes the image sample. Var denotes variance. max denotes the maximum value. abs denotes an absolute value. The abscissa and the ordinate may be coordinates in a Cartesian coordinate system.

In one embodiment, the target image samples are obtained by filtering the original image samples according to the intervals of the sample information content, and the number of image samples in each interval of the sample information content is the same, including dividing the sample information content space corresponding to the target image sample set to obtain at least two intervals of the sample information content; acquiring information content of the image samples; determining corresponding intervals of the sample information content according to the information content of the image samples; and if the number of samples in the intervals of the sample information content is less than the target number, determining the image samples as the target image samples. The information content range corresponding to each interval of the sample information content is different. Each interval of the sample information content contains the target number of image samples.

Dividing the sample information content space corresponding to the target image sample set to obtain at least two intervals of the sample information content, for example, may be dividing the sample information content space corresponding to the target image sample set to obtain four intervals of the sample information content as shown in the following formula:

$$PIC = \left[\left[0, pic_0\right], \left[pic_0, pic_1\right], \left[pic_1, pic_2\right], \left[pic_2, \infty\right]\right].$$

$[0, pic_0]$ denotes the start point and the end point of pic in a first interval. $[pic_0, pic_1]$ denotes the start point and the end point of pic in a second interval. $[pic_1, pic_2]$ denotes the start point and the end point of pic in a third interval. $[pic_2, \infty]$ denotes the start point and the end point of pic in a fourth interval.

The number of samples corresponding to the target image sample set is set to N. The number of samples corresponding to the target image sample set is averaged to four intervals. The number of image samples in each interval is N/4, as shown in the following formula:

$$Interval = \left[N/4, N/4, N/4, N/4\right].$$

N denotes the number of samples corresponding to the target image sample set. Interval denotes the number of samples allocated in each interval after the overall PIC space is divided.

Specifically, the sample information content space corresponding to the target image sample set is divided into four effective intervals. The number of samples corresponding to the target image sample set is N. The number of samples in each interval is selected as N/4. For example, the allocation number in the first interval is N/4. When the PIC (sample information content) of the sampled sample is in the $[0, pic_0]$ interval and the number of samples in the interval does not reach N/4, the sample is selected to enter the sample to be processed. However, when the number of samples in the interval exceeds N/4, samples in this region reach a filled state. The sampled sample whose PIC is in the interval is no longer selected. At this time, if there is still a shortage in other intervals, a random sampling is performed again. Quantities of information are measured for each sampled sample until data in all intervals reaches a satisfied state.

The present disclosure provides an image super-resolution processing apparatus. FIG. 2 is a structural diagram of an image super-resolution processing apparatus according to the present disclosure. As shown in FIG. 2, the image super-resolution processing apparatus in this embodiment of the present disclosure may be integrated on a device. The apparatus includes an acquisition module 21 and a processing module 22. The acquisition module 21 is configured to acquire an image to be processed. The processing module 22 is configured to perform super-resolution processing on the to-be-processed image by a target neural network model. The target neural network model is obtained by iteratively training a pyramidal neural network model by using a target image sample set. Target image samples are obtained by filtering original image samples according to a plurality of intervals of the sample information content. The number of image samples in each interval of the sample information content is the same.

The apparatus provided in this embodiment is configured to implement the method in the embodiments shown in FIG. 1. The apparatus provided in this embodiment has similar implementation principles and technical effects to the method in the embodiments shown in FIG. 1, and details are not described here again.

On the basis of the preceding embodiments, variant embodiments of the preceding embodiments are proposed. It is to be noted here that for ease of description, only differences from the preceding embodiments are described in the variant embodiments.

In one embodiment, the processing module 22 can be configured to establish a pyramidal neural network model; input low-resolution images in target samples into the pyramidal neural network to obtain predicted images; train parameters of the pyramidal neural network according to the target function formed by the predicted images and high-resolution images corresponding to the low-resolution images; and return to perform the operation of inputting the low-resolution images in a target sample set into the pyramidal neural network to obtain the predicted images until a target neural network model is obtained. The target function includes one or more of a function L2 + $\alpha$L1, a function L1 + $\theta$LP, and a function L2 + $\mu$L1 + $\beta$LP. L2 is L2 norm. L1 is L1 norm. LP is LP norm. $\alpha$, $\theta$, $\mu$,and $\beta$ are weights of a regularization factor.

In one embodiment, the processing module 22 can be configured to train the parameters of the pyramidal neural network based on the target function L2 + $\alpha$L1 and a learning rate set as a first value and, after the decrease of an output value of the target function is less than a predetermined value, continue training the parameters of the pyramidal neural network based on the target function L1 + $\theta$LP and a learning rate set as a second value. The second value is less than the first value. $\alpha$ and $\theta$ increase as the learning rate decreases. Here, the decrease of the output value of the target function refers to the difference between the current output value of the target function and the previous output value of the target function.

In one embodiment, the processing module 22 can be configured to train the parameters of the pyramidal neural network according to the target function L2 + $\mu$L1 + $\beta$LP formed by the predicted images and the high-resolution images corresponding to the low-resolution images and, in each round of training or between two rounds of training, adjust $\mu$ and $\beta$ to implement the approximation to the global optimization.

In one embodiment, the sample information content includes gradient information of image samples or variance in image samples.

In one embodiment, the sample information content is: $PI\,C = \|\max(abs(Sobel(a_i[x, y, w, h])))\|$ $PI\,C$ denotes the sample information content. x and y denote the abscissa of the start point of a selected image sample and the ordinate of the start point of the selected image sample, respectively. w and h denote the width of the selected image sample and the height of the selected image sample, respectively. $a_i$ denotes the image sample.

Sobel denotes the Sobel operator. max denotes the maximum value. abs denotes an absolute value. The abscissa and the ordinate may be coordinates in a Cartesian coordinate system.

In one embodiment, the sample information content is: $PI\,C = \|\max(abs(Var(a_i[x, y, w, h])))\|_1$. $PI\,C$ denotes the sample information content. x and y denote the abscissa of the start point of a selected image sample and the ordinate of the start point of the selected image sample, respectively. w and h denote the width of the selected image sample and the height of the selected image sample, respectively. $a_i$ denotes the image sample. Var denotes variance. max denotes the maximum value. abs denotes an absolute value. The abscissa and the ordinate may be coordinates in a Cartesian coordinate system.

In one embodiment, the processing module 22 can be configured to divide a sample information content space corresponding to a target image sample set to obtain at least two intervals of a sample information content; acquire information content of image samples; determine corresponding intervals of the sample information content according to the information content of the image samples; and if the number of samples in the intervals of the sample information content is less than a target number, determine the image samples as target image samples. The information content range corresponding to each interval of the sample information content is different. Each interval of the sample information content contains the target number of image samples.

In the present disclosure, the image super-resolution processing apparatus provided is configured to acquire an image to be processed and perform super-resolution processing on the to-be-processed image through a target neural network model. The target neural network model is obtained by iteratively training a pyramidal neural network model by using a target image sample set. Target image samples are obtained by filtering original image samples according to intervals of the sample information content. The number of image samples in each interval of the sample information content is the same. The problem of the proportion imbalance of output sampled samples in the existing art is solved, effectively alleviating the bias of the network.

Specifically, during the collection process of training samples, samples are filtered by adding the sample information content to the samples in this embodiment of the present disclosure to improve the balance of the statistical significance when the samples enter the network training. First, a statistical index for evaluating the quantities of information of samples is established. The quantities of information of samples obtained by randomly cutting a data set are calibrated under the index. The number of samples required for each segment is determined by segmenting the statistical index. Then, the samples cut randomly are selected for a second time to control the number of samples corresponding to the finally selected target image sample set to be balanced throughout the training process. In the network architecture design, the pyramidal structure is used as the main structure of the network in this embodiment of the present disclosure. At the same time, the bottom-layer, middle-layer, and high-layer semantic information are introduced into an upsampling module simultaneously. Considering that with the deepening of the convolution, the semantic information is biased toward the high-layer, and the discarding of the bottom-layer information and the middle-layer information reduces the attention to the "weak" details of images in the reconstruction result. Therefore, on the one hand, the pyramidal structure is used to concentrate the extracted information, reducing calculation cost, and on the other hand, various kinds of information are fused, improving the reconstruction effect. For the setting of the target function and hyperparameter adjustment during the training process, a multi-norm regularization method is used during the training process to improve the contribution to the non-significant texture portion. At the same time, the weights of the regularization factor are adjusted according to the convergence of the network during the training process. Dynamical adjustment improves the convergence efficiency of the network on the one hand, and avoids the network falling into a minimum on the other hand, more effectively updating network hyperparameters.

In this embodiment of the present disclosure, in view of the problem of the proportion imbalance of output sampled samples in the existing super-resolution method and the similarity of smooth regions, the proportion of the smooth regions is significantly higher than the proportion of texture portions of other segmented data in statistics. The deepening of the network structure leads to the lack of shallow-layer information, causing the imbalance of shallow-layer, middle-layer, and high-layer information during the reconstruction process. Solutions of the present disclosure can effectively alleviate the bias of the network, improve the problem of the lack of details during the super-resolution reconstruction process, and reconstruct the defect that the directions of the texture portions are disordered.

In this embodiment of the present disclosure, various feature information in samples is fully used. The supervised deep learning effect largely depends on the richness of samples. Although the sample data provided by a target has been greatly improved in absolute quantity, the relative numbers among the data are not balanced, especially for high-resolution samples where large pieces of sky, glass, or other slowly changing regions often exist. In this embodiment of the present disclosure, by analyzing the information entropy of samples, the data imbalance is reduced, and the neural network model is provided with better information input. For a multiscale network architecture, multi-level information is input into an up-sampling module through a pyramidal method. Subsequent features to be biased towards high-layer features and the reduction in the proportion of shallow-layer features and middle-layer features are decreased along with increasing depth. In the present disclosure, multi-layer outputs of a pyramid are imported into an up-sampling module to improve the data richness of the up-sampling module. For using multi-norm regularization, compared with the current supervised method in which the L2 norm or the L1 norm is commonly used as a target function, the present disclosure suggests to use the manner in which the LP norm is jointed simultaneously and dynamical adjustment during the training process is used to improve training convergence efficiency and attention to fine targets.

The present disclosure provides a device. FIG. 3 is a structural diagram of a device according to the present disclosure. As shown in FIG. 3, the device provided in the present disclosure includes one or more processors 31 and a storage apparatus 32. One or more processors 31 may be provided in the device. In FIG. 3, one processor 31 is used as an example. The storage apparatus 32 is used for storing one or more programs. When executed by the one or more processors 31, the one or more programs cause the one or more processors 31 to implement the method described in FIG. 1 in embodiments of the present disclosure.

The device further includes a communication apparatus 33, an input apparatus 34, and an output apparatus 35.

The processor 31, the storage apparatus 32, the communication apparatus 33, the input apparatus 34, and the output apparatus 35 that are in the device may be connected through a bus or in other manners. In FIG. 3, the connection through the bus is used as an example.

The input apparatus 34 may be used for receiving inputted digital or character information and for generating key signal input related to user settings and function control of the device. The output apparatus 35 may include display devices such as a display screen.

The communication apparatus 33 may include a receiver and a transmitter. The communication apparatus 33 is configured to perform information transceiving communication under the control of the processor 31. The information includes, but is not limited to, uplink authorization information.

As a computer-readable storage medium, the storage apparatus 32 may be configured to store software programs, computer-executable programs and modules such as program instructions/modules (for example, the acquisition module 21 and the processing module 22 in the image super-resolution processing apparatus) corresponding to the image super-resolution processing method described in FIG. 1 in the embodiments of the present disclosure. The storage apparatus 32 may include a program storage region and a data storage region. The program storage region may store an operating system and an application program required by at least one function. The data storage region may store data created depending on the use of a device. Additionally, the storage apparatus 32 may include a high-speed random-access memory and may further include a nonvolatile memory, such as at least one magnetic dick memory, a flash memory, or another nonvolatile solid-state memory. In some examples, the storage apparatus 32 may further include memories which are remotely disposed respect to the processor 31, and these remote memories may be connected to the device via a network. Examples of the preceding network include, but are not limited to, the Internet, an intranet, a local area network, a mobile communication network and a combination thereof.

An embodiment of the present disclosure further provides a storage medium for storing computer programs which, when executed by a processor, implements the image super-resolution processing method described in embodiments of the present disclosure. The method includes: acquiring an image to be processed; and performing super-resolution processing on the to-be-processed image by a target neural network model. The target neural network model is obtained by iteratively training a pyramidal neural network model by using a target image sample set. Target image samples are obtained by filtering original image samples according to intervals of a sample information content. The number of image samples in each interval of the sample information content is the same.

The computer storage medium in this embodiment of the present disclosure may employ any combination of one or more computer readable medium. A computer-readable medium may be a computer-readable signal medium or a computer-readable storage medium. The computer readable storage medium may be, for example, but not limited to, an electrical, magnetic, optical, electromagnetic, infrared or semiconductor system, apparatus or component, or any combination thereof. More specific examples of the computer-readable storage medium include (nonexhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable CD-**ROM, an** optical storage component, a magnetic storage component, or any suitable combination thereof. The computer-readable storage medium may be any tangible medium including or storing a program. The program may be used by or used in conjunction with an instruction execution system, apparatus, or component.

The computer-readable signal medium may include a data signal propagated in a baseband or as part of a carrier. The data signal carries computer-readable program codes. The data signal propagated in this manner may be in multiple forms and includes, and is not limited to, an electromagnetic signal, an optical signal, or any suitable combination thereof. The computer-readable signal medium may further be any computer-readable medium other than a computer-readable storage medium. The computer-readable medium may send, propagate, or transmit the program used by or used in conjunction with the instruction execution system, apparatus, or component.

The program codes included on the computer-readable medium may be transmitted on any suitable medium including, but not limited to, a wireless medium, a wire, an optical cable, a radio frequency (RF) and the like or transmitted on any suitable combination thereof.

Computer program code for performing the operations of the present disclosure may be written in one or more programming languages or combination thereof, including object-oriented programming languages such as Java, Smalltalk, C + +, as well as conventional procedural programming languages such as "C" or similar programming languages. The program codes may be executed entirely on a user computer, partly on the user computer, as a stand-alone software package, partly on the user computer and partly on a remote computer, or entirely on the remote computer or a server. In the case relating to a remote computer, the remote computer may be connected to a user computer via any kind of network including a local area network (LAN) or a wide area network (WAN), or may be connected to an external computer (for example, via the Internet through an Internet service provider).

The preceding are only exemplary embodiments of the present disclosure and are not intended to limit the scope of the present disclosure.

It is to be understood by those skilled in the art that the term "user equipment" covers any suitable type of radio UE, for example, a mobile phone, a portable data processing apparatus, a portable web browser, or a vehicle-mounted mobile station.

In general, multiple embodiments of the present disclosure may be implemented in hardware, dedicated circuits, software, logics or any combination thereof. For example, some aspects may be implemented in hardware while other aspects may be implemented in firmware or software that may be executed by a controller, a microprocessor or another computing apparatus, though the present disclosure is not limited thereto.

The embodiments of the present disclosure may be implemented by computer program instructions executed by a data processor of a mobile apparatus, for example, implemented in a processor entity, by hardware or by a combination of software and hardware. The computer program instructions may be assembly instructions, instruction set architecture (ISA) instructions, machine instructions, machine-related instructions, microcodes, firmware instructions, status setting data or source or object codes written in any combination of one or more programming languages.

A block diagram of any logic flow among the drawings of the present disclosure may represent program steps, may represent interconnected logic circuits, modules and functions, or may represent a combination of program steps with logic circuits, modules and functions. Computer programs may be stored in the memory. The memory may be of any type suitable for a local technical environment and may be implemented using any suitable data storage technology, such as, but not limited to, a read-only memory (ROM), a random-access memory (RAM) and an optical memory apparatus and system (digital video disc (DVD) or compact disc (CD)). The computer-readable medium may include a non-transitory storage medium. The data processor may be in any type suitable for the local technical environment, for example, but not limited to, a general-purpose computer, a special- purpose computer, a microprocessor, a digital signal processor (DSP), an application-specific integrated circuit (ASIC), a field-programmable gate array (FGPA), and a processor based on a multi-core processor architecture.

A detailed description of exemplary embodiments of the present disclosure has been provided in the preceding through exemplary and non-restrictive examples. However, considering the drawings and the claims, various modifications and adjustments to the preceding embodiments are apparent to those skilled in the art but do not deviate from the scope of the present disclosure. Accordingly, the proper scope of the present disclosure is determined according to the claims.

## Claims

**1.** A computer-implemented image super-resolution processing method, comprising:

acquiring (S110) an image to be processed; and
performing (S120) super-resolution processing on the to-be-processed image by a target neural network model, wherein the target neural network model is obtained by iteratively training a pyramidal neural network model by using a target image sample set, target image samples in the target image sample set are obtained by filtering original image samples according to a plurality of intervals of a sample information content, and a number of image samples in each of the intervals of the sample information content is the same;
**characterized in that**
the sample information content comprises gradient information of image samples or variance in image samples; wherein the target image samples being obtained by filtering the original image samples according to the intervals of the sample information content, and the number of image samples in the each of the intervals of the sample information content being the same, comprises:

dividing a sample information content space corresponding to the target image sample set to obtain at least two intervals of the sample information content, wherein the intervals of the sample information content correspond to different information content ranges, and the each of the intervals of the sample information content contains a target number of image samples;
acquiring information content of the image samples;
determining corresponding intervals of the sample information content according to the information content of the image samples; and
in response to that a number of image samples in the each of the intervals of the sample information content is less than the target number, determining the image samples as the target image samples; and
wherein the image samples are fixed-size blocks, and a selected image sample from the image samples is represented as $a_i[x,y,w,h]$, $a_i$ denotes the selected image sample, x and y denote an abscissa of a start point of the selected image sample and an ordinate of the start point of the selected image sample respectively, and w and h denote a width of the selected image sample and a height of the selected image sample respectively.

**2.** The method according to claim 1, wherein iteratively training the pyramidal neural network model by using the target image sample set comprises:

establishing the pyramidal neural network model;
inputting low-resolution images in the target sample set into the pyramidal neural network to obtain predicted images;
training parameters of the pyramidal neural network according to a target function formed by the predicted images and high-resolution images corresponding to the low-resolution images, wherein the target function comprises at least one of a function $L2 + \alpha L1$, a function $L1 + \theta LP$, and a function $L2 + \mu L1 + \beta LP$, wherein L2 is L2 norm, L1 is L1 norm, LP is LP norm, and $\alpha$, $\theta$, $\mu$, and $\beta$ are weights of a regularization factor, wherein the L1 norm is determined according to $L1 = \sum_{i=1}^{n} |x_i|$, the L2 norm is determined according to $L2 = \left(\sum_{i=1}^{n} x_i^2\right)^{1/2}$, the LP norm is determined according to $Lp = \left(\sum_{i=1}^{n} x_i^p\right)^{1/p}$, $X_i$ denotes difference between the predicted images and the high-resolution images corresponding to the low-resolution images; and
returning to perform an operation of inputting the low-resolution images in the target sample set into the pyramidal neural network to obtain the predicted images until the target neural network model is obtained.

**3.** The method according to claim 2, wherein training the parameters of the pyramidal neural network according to the target function formed by the predicted images and the high-resolution images corresponding to the low-resolution images comprises:

training the parameters of the pyramidal neural network based on the target function L2 + $\alpha$L1 and a learning rate set as a first value; and
after a decrease of an output value of the target function is less than a predetermined value, continuing training the parameters of the pyramidal neural network based on the target function L1 + $\theta$LP and a learning rate set as a second value, wherein the second value is less than the first value, and $\alpha$ and $\theta$ increase as the learning rate decreases.

**4.** The method according to claim 2, wherein training the parameters of the pyramidal neural network according to the target function formed by the predicted images and the high-resolution images corresponding to the low-resolution images comprises:

training the parameters of the pyramidal neural network according to the target function L2 + $\mu$L1 + $\beta$LP formed by the predicted images and the high-resolution images corresponding to the low-resolution images; and
in each round of training or between two rounds of training, adjusting $\mu$ and $\beta$ to implement approximation to a global optimization.

**5.** The method according to claim 1, wherein the sample information content is $PI\,C = \|max\,(abs\,(Sobel\,(a_i\,[x, y, w, h])))\|_1$, wherein *PIC* denotes the sample information content; x and y denote an abscissa of a start point of a selected image sample and an ordinate of the start point of the selected image sample, respectively; w and h denote a width of the selected image sample and a height of the selected image sample, respectively; and $a_i$ denotes the image sample.

**6.** The method according to claim 1, wherein the sample information content is $PI\,C = \|max\,(abs\,(Var\,(a_i\,[x, y, w, h])))\|_1$, wherein *PIC* denotes the sample information content; x and y denote an abscissa of a start point of a selected image sample and an ordinate of the start point of the selected image sample, respectively; w and h denote a width of the selected image sample and a height of the selected image sample, respectively; and $a_i$ denotes the image sample.

**7.** An image super-resolution processing apparatus, comprising:

an acquisition module (21) configured to acquire an image to be processed; and
a processing module (22) configured to perform super-resolution processing on the to-be-processed image by a target neural network model, wherein the target neural network model is obtained by iteratively training a pyramidal neural network model by using a target image sample set, the target image samples are obtained by filtering original image samples according to a plurality of intervals of a sample information content, and a number of image samples in each of the intervals of the sample information content is the same;
the processing module (22) being **characterized in that** the sample information content comprises gradient information of image samples or variance in image samples;
wherein the processing module (22) is further configured to:

divide a sample information content space corresponding to the target image sample set to obtain at least two intervals of the sample information content, wherein the intervals of the sample information content correspond to different information content ranges, and the each of the intervals of the sample information content contains a target number of image samples;
acquire information content of the image samples;
determine corresponding intervals of the sample information content according to the information content of the image samples; and
in response to that a number of image samples in the each of the intervals of the sample information content is less than the target number, determining the image samples as the target image samples; and
wherein the image samples are fixed-size blocks, and a selected image sample from the image samples is represented as $a_i[x,y,w,h]$, $a_i$ denotes the selected image sample, x and y denote an abscissa of a start point of the selected image sample and an ordinate of the start point of the selected image sample respectively, and w and h denote a width of the selected image sample and a height of the selected image sample respectively.

**8.** A storage medium for storing computer programs which, when executed by a processor (31), cause the processor (31) to the image super-resolution processing method according to any one of claims 1 to 6.

## Patentansprüche

**1.** Computerimplementiertes Verfahren zum Verarbeiten einer Bildsuperauflösung, das Folgendes umfasst:

Erfassen (S110) eines zu verarbeitenden Bildes; und
Durchführen (S120) einer Superauflösungsverarbeitung an dem zu verarbeitenden Bild durch ein neuronales Ziel-Netzwerk-Modell, wobei das neuronale Ziel-Netzwerk-Modell durch iteratives Trainieren eines pyramidenförmigen neuronalen Netzwerk-Modells unter Verwenden eines Ziel-Bild-Abtastsatzes erhalten wird, Ziel-Bild-Abtastungen in dem Ziel-Bild-Abtastsatz durch Filtern ursprünglicher Bild-Abtastungen gemäß einer Vielzahl von Intervallen eines Abtastinformationsinhalts erhalten werden und eine Anzahl von Bild-Abtastungen in jedem der Intervalle des Abtastinformationsinhalts gleich ist;
**dadurch gekennzeichnet, dass**
der Abtastinformationsinhalt Gradienteninformationen von Bild-Abtastungen oder eine Varianz in Bild-Abtastungen umfasst;
wobei die Ziel-Bild-Abtastungen durch Filtern der ursprünglichen Bild-Abtastungen gemäß den Intervallen des Abtastinformationsinhalts erhalten werden und die Anzahl von Bild-Abtastungen in jedem der Intervalle des Abtastinformationsinhalts gleich ist, wobei das Verfahren Folgendes umfasst:

Teilen eines Abtastinformationsinhaltsraums, der dem Ziel-Bild-Abtastsatz entspricht, um mindestens zwei Intervalle des Abtastinformationsinhalts zu erhalten, wobei die Intervalle des Abtastinformationsinhalts verschiedenen Informationsinhaltsreichweiten entsprechen und jedes der Intervalle des Abtastinformationsinhalts eine Ziel-Anzahl von Bild-Abtastungen enthält;
Erfassen eines Informationsinhalts der Bild-Abtastungen;
Bestimmen entsprechender Intervalle des Abtastinformationsinhalts gemäß dem Informationsinhalt der Bild-Abtastungen; und
als Reaktion darauf, dass eine Anzahl von Bild-Abtastungen in jedem der Intervalle des Abtastinformationsinhalts kleiner als die Ziel-Anzahl ist, Bestimmen der Bild-Abtastungen als die Ziel-Bild-Abtastungen; und
wobei die Bild-Abtastungen Blöcke mit fester Größe sind und eine ausgewählte Bild-Abtastung aus den Bild-Abtastungen als $a_i$ [x, y, w, h] repräsentiert wird, $a_i$ die ausgewählte Bild-Abtastung bezeichnet, x und y eine Abszisse eines Startpunkts der ausgewählten Bild-Abtastung bzw. eine Ordinate des Startpunkts der ausgewählten Bild-Abtastung bezeichnen und w und h eine Breite der ausgewählten Bild-Abtastung bzw. eine Höhe der ausgewählten Bild-Abtastung bezeichnen.

**2.** Verfahren nach Anspruch 1, wobei das iterative Trainieren des pyramidenförmigen neuronalen Netzwerk-Modells unter Verwenden des Ziel-Bild-Abtastsatzes Folgendes umfasst:

Herstellen des pyramidenförmigen neuronalen Netzwerk-Modells;
Eingeben von Bildern mit niedriger Auflösung in dem Ziel-Abtastsatz in das pyramidenförmige neuronale Netzwerk, um vorhergesagte Bilder zu erhalten;
Trainieren von Parametern des pyramidenförmigen neuronalen Netzwerks gemäß einer Zielfunktion, die durch die vorhergesagten Bilder und Bilder mit hoher Auflösung, die den Bildern mit niedriger Auflösung entsprechen, gebildet wird, wobei die Zielfunktion eine der Funktionen L2 + αL1, L1 + θLP und L2 + μL1 + βLP umfasst, wobei L2 eine L2-Norm ist, L1 eine L1-Norm ist, LP eine LP-Norm ist und α, θ, μ und β Gewichtungen eines Regularisierungsfaktors sind;
wobei die L1-Norm gemäß $L1 = \sum_{i=1}^{n} |x_i|$ bestimmt wird, die L2-Norm gemäß $L2 = (\sum_{i=1}^{n} x_i^2)^{1/2}$ bestimmt wird, die LP-Norm gemäß $Lp = \left(\sum_{i=1}^{n} x_i^p\right)^{1/p}$ bestimmt wird, $x_i$ eine Differenz zwischen den vorhergesagten Bildern und den Bildern mit hoher Auflösung, die den Bildern mit niedriger Auflösung entsprechen, bezeichnet; und
Zurückgeben, um einen Vorgang des Eingebens der Bilder mit niedriger Auflösung in dem Ziel-Abtastsatz in das pyramidenförmige neuronale Netzwerk durchzuführen, um die vorhergesagten Bilder zu erhalten, bis das neuronale Ziel-Netzwerk-Modell erhalten wird.

**3.** Verfahren nach Anspruch 2, wobei das Trainieren der Parameter des pyramidenförmigen neuronalen Netzwerks gemäß der Zielfunktion, die durch die vorhergesagten Bilder und die Bilder mit hoher Auflösung, die den Bildern mit niedriger Auflösung entsprechen, gebildet wird, Folgendes umfasst:

Trainieren der Parameter des pyramidenförmigen neuronalen Netzwerks auf der Basis der Zielfunktion L2 + $\alpha$L1 und eines Lernratensatzes als einen ersten Wert; und
nachdem eine Abnahme eines Ausgabe-Werts der Zielfunktion kleiner als ein vorgegebener Wert ist, Fortsetzen des Trainierens der Parameter des pyramidenförmigen neuronalen Netzwerks auf der Basis der Zielfunktion L1 + $\theta$LP und eines Lernratensatzes als einen zweiten Wert, wobei der zweite Wert kleiner als der erste Wert ist und $\alpha$ und $\theta$ zunehmen, wenn die Lernrate abnimmt.

**4.** Verfahren nach Anspruch 2, wobei das Trainieren der Parameter des pyramidenförmigen neuronalen Netzwerks gemäß der Zielfunktion, die durch die vorhergesagten Bilder und die Bilder mit hoher Auflösung, die den Bildern mit niedriger Auflösung entsprechen, gebildet wird, Folgendes umfasst:

Trainieren der Parameter des pyramidenförmigen neuronalen Netzwerks gemäß der Zielfunktion L2 + $\mu$L1 + $\beta$LP, die durch die vorhergesagten Bilder und die Bilder mit hoher Auflösung, die den Bildern mit niedriger Auflösung entsprechen, gebildet wird; und
in jeder Trainingsrunde oder zwischen zwei Trainingsrunden, Anpassen von $\mu$ und $\beta$, um eine Annäherung an eine globale Optimierung zu implementieren.

**5.** Verfahren nach Anspruch 1, wobei der Abtastinformationsinhalt PIC =||max(abs (Sobel ($a_i$ [x, y, w, h])))$||_1$ ist, wobei PIC den Abtastinformationsinhalt bezeichnet; x und y eine Abszisse eines Startpunkts einer ausgewählten Bild-Abtastung bzw. eine Ordinate des Startpunkts der ausgewählten Bild-Abtastung bezeichnen; w und h eine Breite der ausgewählten Bild-Abtastung bzw. eine Höhe der ausgewählten Bild-Abtastung bezeichnen; und $a_i$ die Bild-Abtastung bezeichnet.

**6.** Verfahren nach Anspruch 1, wobei der Abtastinformationsinhalt PIC = ||max(abs (Var ($a_i$ [x, y, w, h])))$||_1$ ist, wobei PIC den Abtastinformationsinhalt bezeichnet; x und y eine Abszisse eines Startpunkts einer ausgewählten Bild-Abtastung bzw. eine Ordinate des Startpunkts der ausgewählten Bild-Abtastung bezeichnen; w und h eine Breite der ausgewählten Bild-Abtastung bzw. eine Höhe der ausgewählten Bild-Abtastung bezeichnen; und $a_i$ die Bild-Abtastung bezeichnet.

**7.** Vorrichtung zum Verarbeiten einer Bildsuperauflösung, die Folgendes umfasst:

ein Erfassungsmodul (21), das konfiguriert ist, um ein zu verarbeitendes Bild zu erfassen; und
ein Verarbeitungsmodul (22), das konfiguriert ist, um eine Superauflösungsverarbeitung an dem zu verarbeitenden Bild durch ein neuronales Ziel-Netzwerk-Modell durchzuführen, wobei das neuronale Ziel-Netzwerk-Modell durch iteratives Trainieren eines pyramidenförmigen neuronalen Netzwerk-Modells unter Verwenden eines Ziel-Bild-Abtastsatzes erhalten wird, die Ziel-Bild-Abtastungen durch Filtern ursprünglicher Bild-Abtastungen gemäß einer Vielzahl von Intervallen eines Abtastinformationsinhalts erhalten werden und eine Anzahl von Bild-Abtastungen in jedem der Intervalle des Abtastinformationsinhalts gleich ist;
wobei das Verarbeitungsmodul (22) **dadurch gekennzeichnet ist, dass** der Abtastinformationsinhalt Gradienteninformationen von Bild-Abtastungen oder eine Varianz in Bild-Abtastungen umfasst;
wobei das Verarbeitungsmodul (22) ferner konfiguriert ist zum:

Teilen eines Abtastinformationsinhaltsraums, der dem Ziel-Bild-Abtastsatz entspricht, um mindestens zwei Intervalle des Abtastinformationsinhalts zu erhalten, wobei die Intervalle des Abtastinformationsinhalts verschiedenen Informationsinhaltsreichweiten entsprechen und jedes der Intervalle des Abtastinformationsinhalts eine Ziel-Anzahl von Bild-Abtastungen enthält;
Erfassen eines Informationsinhalts der Bild-Abtastungen;
Bestimmen entsprechender Intervalle des Abtastinformationsinhalts gemäß dem Informationsinhalt der Bild-Abtastungen; und
als Reaktion darauf, dass eine Anzahl von Bild-Abtastungen in jedem der Intervalle des Abtastinformationsinhalts kleiner als die Ziel-Anzahl ist, Bestimmen der Bild-Abtastungen als die Ziel-Bild-Abtastungen; und
wobei die Bild-Abtastungen Blöcke mit fester Größe sind und eine ausgewählte Bild-Abtastung aus den Bild-Abtastungen als $a_i$ [x, y, w, h] repräsentiert wird, $a_i$ die ausgewählte Bild-Abtastung bezeichnet, x und y eine Abszisse eines Startpunkts der ausgewählten Bild-Abtastung bzw. eine Ordinate des Startpunkts der ausgewählten Bild-Abtastung bezeichnen und w und h eine Breite der ausgewählten Bild-Abtastung bzw. eine Höhe der ausgewählten Bild-Abtastung bezeichnen.

**8.** Speichermedium zum Speichern von Computerprogrammen, die, wenn sie von einem Prozessor (31) ausgeführt werden, bewirken, dass der Prozessor (31) das Verfahren zum Verarbeiten einer Bildsuperauflösung nach einem der Ansprüche 1 bis 6 ausführt.

## Revendications

**1.** Procédé de traitement de super-résolution d'image mis en œuvre par ordinateur, comprenant les étapes consistant à :

acquérir (S110) une image à traiter ; et
réaliser (S120) un traitement de super-résolution sur l'image à traiter par un modèle de réseau neuronal cible, dans lequel le modèle de réseau neuronal cible est obtenu en entraînant de manière itérative un modèle de réseau neuronal pyramidal en utilisant un ensemble d'échantillons d'image cible, des échantillons d'image cible dans l'ensemble d'échantillons d'image cible sont obtenus en filtrant des échantillons d'image d'origine selon une pluralité d'intervalles d'un contenu d'informations d'échantillon, et un nombre d'échantillons d'image dans chacun des intervalles du contenu d'informations d'échantillon est le même ;
**caractérisé en ce que**
le contenu d'informations d'échantillon comprend des informations de gradient d'échantillons d'image ou une variance dans des échantillons d'image ;
dans lequel les échantillons d'image cible sont obtenus en filtrant les échantillons d'image d'origine selon les intervalles du contenu d'informations d'échantillon, et le nombre d'échantillons d'image dans chacun des intervalles du contenu d'informations d'échantillon est le même, comprenant les étapes consistant à :

diviser un espace de contenu d'informations d'échantillon correspondant à l'ensemble d'échantillons d'image cible pour obtenir au moins deux intervalles du contenu d'informations d'échantillon, dans lequel les intervalles du contenu d'informations d'échantillon correspondent à différentes plages de contenu d'informations, et chacun des intervalles du contenu d'informations d'échantillon contient un nombre cible d'échantillons d'image ;
acquérir un contenu d'informations des échantillons d'image ;
déterminer des intervalles correspondants du contenu d'informations d'échantillon selon le contenu d'informations des échantillons d'image ; et
en réponse au fait qu'un nombre d'échantillons d'image dans chacun des intervalles du contenu d'informations d'échantillon est inférieur au nombre cible, déterminer les échantillons d'image en tant qu'échantillons d'image cible ; et
dans lequel les échantillons d'image sont des blocs de taille fixe, et un échantillon d'image sélectionné parmi les échantillons d'image est représenté par $a_i$ [x, y, w, h], $a_i$ désigne l'échantillon d'image sélectionné, x et y désignent une abscisse d'un point de démarrage de l'échantillon d'image sélectionné et une ordonnée du point de démarrage de l'échantillon d'image sélectionné respectivement, et w et h désignent une largeur de l'échantillon d'image sélectionné et une hauteur de l'échantillon d'image sélectionné respectivement.

**2.** Procédé selon la revendication 1, dans lequel l'étape consistant à entraîner de manière itérative le modèle de réseau neuronal pyramidal en utilisant l'ensemble d'échantillons d'image cible comprend les étapes consistant à :

établir le modèle de réseau neuronal pyramidal ;
entrer des images à basse résolution dans l'ensemble d'échantillons cible dans le réseau neuronal pyramidal pour obtenir des images prédites ;
entraîner des paramètres du réseau neuronal pyramidal selon une fonction cible formée par les images prédites et des images à haute résolution correspondant aux images à basse résolution, dans lequel la fonction cible comprend au moins l'une d'une fonction L2 + $\alpha$L1, L1 + $\theta$LP, et L2 + $\mu$L1 + $\beta$LP, dans lequel L2 est une norme L2, L1 est une norme L1, LP est une norme LP, et $\alpha$, $\theta$, $\mu$, et $\beta$ sont des pondérations d'un facteur de régularisation ;
dans lequel la norme L1 est déterminée selon $L1 = \sum_{i=1}^{n} |x_i|$, la norme L2 est déterminée selon $L2 = (\sum_{i=1}^{n} x_i^2)^{1/2}$, la norme LP est déterminée selon $Lp = \left(\sum_{i=1}^{n} x_i^p\right)^{1/p}$, $x_i$ désigne une différence entre les images prédites et les images à haute résolution correspondant aux images à basse résolution ; et
renvoyer pour réaliser une opération consistant à entrer les images à basse résolution dans l'ensemble d'échantillons cible dans le réseau neuronal pyramidal pour obtenir les images prédites jusqu'à ce que le modèle de réseau neuronal cible soit obtenu.

**3.** Procédé selon la revendication 2, dans lequel l'étape consistant à entraîner les paramètres du réseau neuronal pyramidal selon la fonction cible formée par les images prédites et les images à haute résolution correspondant aux images à basse résolution comprend les étapes consistant à :

entraîner les paramètres du réseau neuronal pyramidal sur la base de la fonction cible $L2 + \alpha L1$ et un ensemble de taux d'apprentissage en tant que première valeur ; et
après qu'une diminution d'une valeur de sortie de la fonction cible est inférieure à une valeur prédéterminée, continuer à entraîner les paramètres du réseau neuronal pyramidal sur la base de la fonction cible $L1 + \theta LP$ et un ensemble de taux d'apprentissage en tant que seconde valeur, dans lequel la seconde valeur est inférieure à la première valeur, et $\alpha$ et $\theta$ augmentent à mesure que le taux d'apprentissage diminue.

**4.** Procédé selon la revendication 2, dans lequel l'étape consistant à entraîner les paramètres du réseau neuronal pyramidal selon la fonction cible formée par les images prédites et les images à haute résolution correspondant aux images à basse résolution comprend les étapes consistant à :

entraîner les paramètres du réseau neuronal pyramidal selon la fonction cible $L2 + \mu L1 + \beta LP$ formée par les images prédites et les images à haute résolution correspondant aux images à basse résolution ; et
à chaque cycle d'entraînement ou entre deux cycles d'entraînement, ajuster $\mu$ et $\beta$ pour mettre en œuvre une approximation d'une optimisation globale.

**5.** Procédé selon la revendication 1, dans lequel le contenu d'informations d'échantillon est $PIC = ||max(abs (Sobel (a_i [x, y, w, h])))||_1$, dans lequel PIC désigne le contenu d'informations d'échantillon ; x et y désignent une abscisse d'un point de démarrage d'un échantillon d'image sélectionné et une ordonnée du point de démarrage de l'échantillon d'image sélectionné, respectivement ; w et h désignent une largeur de l'échantillon d'image sélectionné et une hauteur de l'échantillon d'image sélectionné, respectivement ; et $a_i$ désigne l'échantillon d'image.

**6.** Procédé selon la revendication 1, dans lequel le contenu d'informations d'échantillon est $PIC = ||max(abs (Var (a_i [x, y, w, h])))||_1$, dans lequel PIC désigne le contenu d'informations d'échantillon ; x et y désignent une abscisse d'un point de démarrage d'un échantillon d'image sélectionné et une ordonnée du point de démarrage de l'échantillon d'image sélectionné, respectivement ; w et h désignent une largeur de l'échantillon d'image sélectionné et une hauteur de l'échantillon d'image sélectionné, respectivement ; et $a_i$ désigne l'échantillon d'image.

**7.** Appareil de traitement de super-résolution d'image, comprenant :

un module d'acquisition (21) configuré pour acquérir une image à traiter ; et
un module de traitement (22) configuré pour réaliser un traitement de super-résolution sur l'image à traiter par un modèle de réseau neuronal cible, dans lequel le modèle de réseau neuronal cible est obtenu en entraînant de manière itérative un modèle de réseau neuronal pyramidal en utilisant un ensemble d'échantillons d'image cible, les échantillons d'image cible sont obtenus en filtrant des échantillons d'image d'origine selon une pluralité d'intervalles d'un contenu d'informations d'échantillon, et un nombre d'échantillons d'image dans chacun des intervalles du contenu d'informations d'échantillon est le même ;
le module de traitement (22) étant **caractérisé en ce que** le contenu d'informations d'échantillon comprend des informations de gradient d'échantillons d'image ou une variance dans des échantillons d'image ;
dans lequel le module de traitement (22) est en outre configuré pour :

diviser un espace de contenu d'informations d'échantillon correspondant à l'ensemble d'échantillons d'image cible pour obtenir au moins deux intervalles du contenu d'informations d'échantillon, dans lequel les intervalles du contenu d'informations d'échantillon correspondent à différentes plages de contenu d'informations, et chacun des intervalles du contenu d'informations d'échantillon contient un nombre cible d'échantillons d'image ;
acquérir un contenu d'informations des échantillons d'image ;
déterminer des intervalles correspondants du contenu d'informations d'échantillon selon le contenu d'informations des échantillons d'image ; et
en réponse au fait qu'un nombre d'échantillons d'image dans chacun des intervalles du contenu d'informations d'échantillon est inférieur au nombre cible, déterminer les échantillons d'image en tant qu'échantillons d'image cible ; et
dans lequel les échantillons d'image sont des blocs de taille fixe, et un échantillon d'image sélectionné parmi les échantillons d'image est représenté par $a_i [x, y, w, h]$, $a_i$ désigne l'échantillon d'image sélectionné, x et y désignent une abscisse d'un point de démarrage de l'échantillon d'image sélectionné et une ordonnée du point de démarrage de l'échantillon d'image sélectionné respectivement, et w et h désignent une largeur de l'échantillon d'image sélectionné et une hauteur de l'échantillon d'image sélectionné respectivement.

**8.** Moyen de stockage pour stocker des programmes informatiques qui, lorsqu'ils sont exécutés par un processeur (31), amènent le processeur (31) à mettre en œuvre le procédé de traitement de super-résolution d'image selon l'une quelconque des revendications 1 à 6.

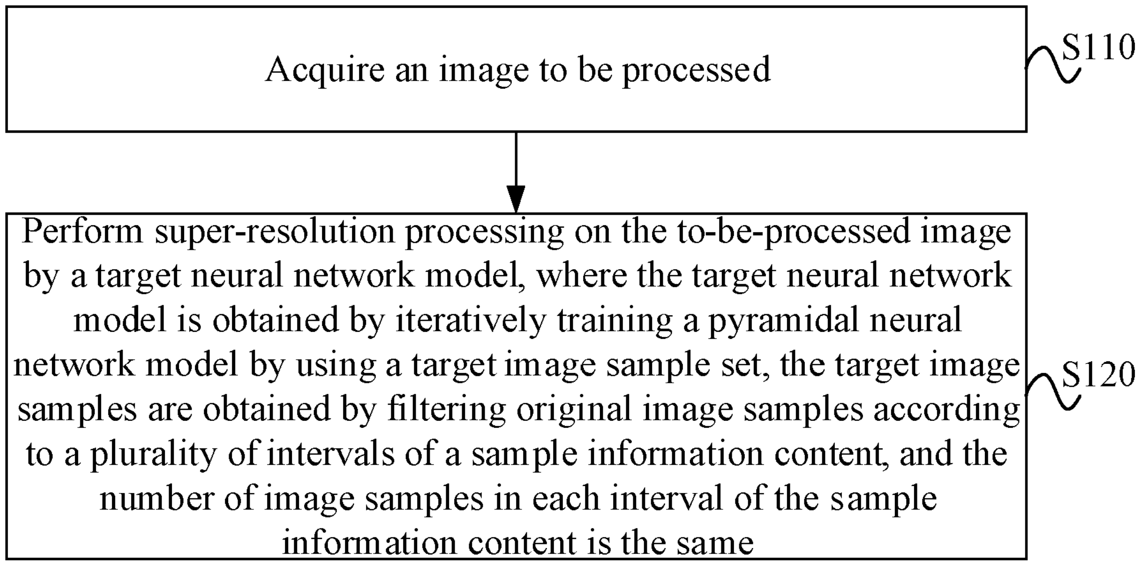
Acquire an image to be processed
S110
Perform super-resolution processing on the to-be-processed image by a target neural network model, where the target neural network model is obtained by iteratively training a pyramidal neural network model by using a target image sample set, the target image samples are obtained by filtering original image samples according to a plurality of intervals of a sample information content, and the number of image samples in each interval of the sample information content is the same
S120

**FIG. 1**

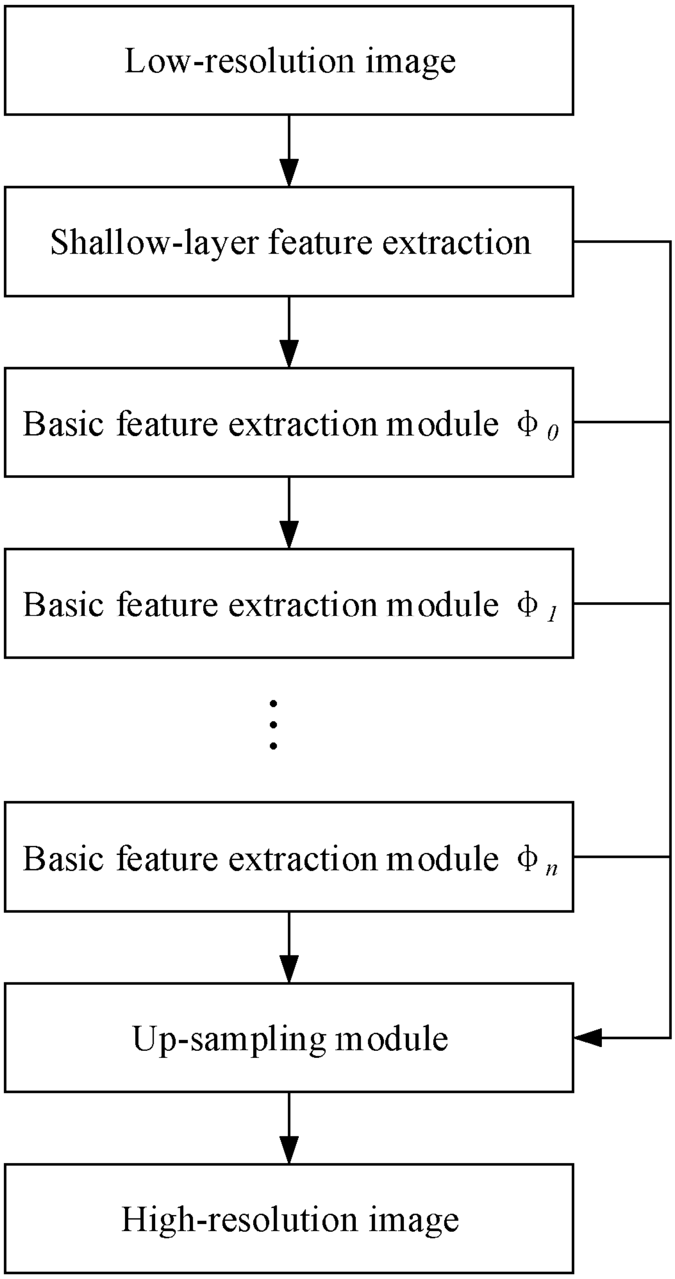
Low-resolution image
Shallow-layer feature extraction
Basic feature extraction module Φ 0
Basic feature extraction module Φ 1
Basic feature extraction module Φ n
Up-sampling module
High-resolution image

FIG. 1A

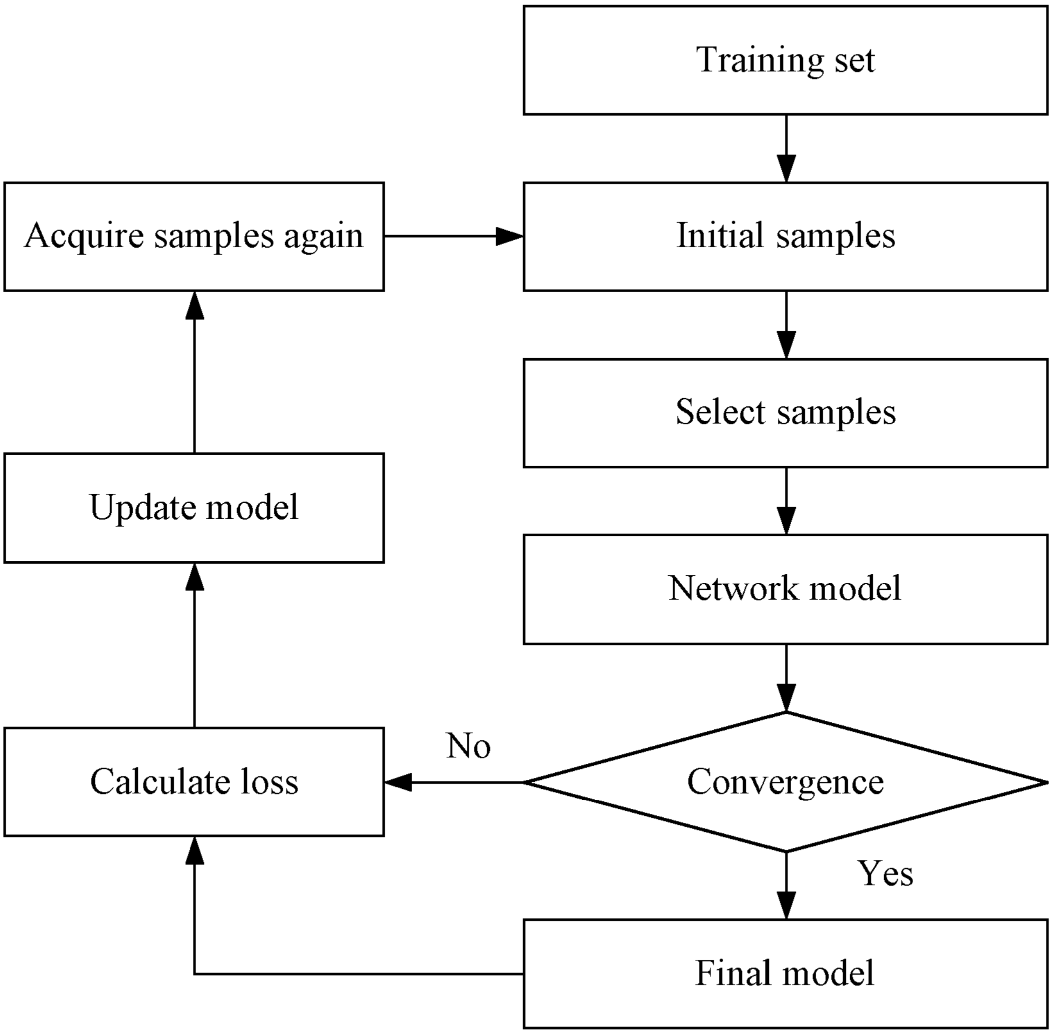
Training set
Acquire samples again
Initial samples
Select samples
Update model
Network model
No
Calculate loss
Convergence
Yes
Final model

FIG. 1B

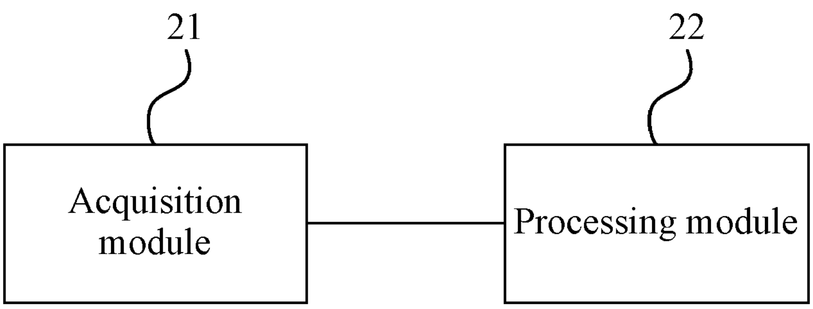
21
22
Acquisition module
Processing module

FIG. 2

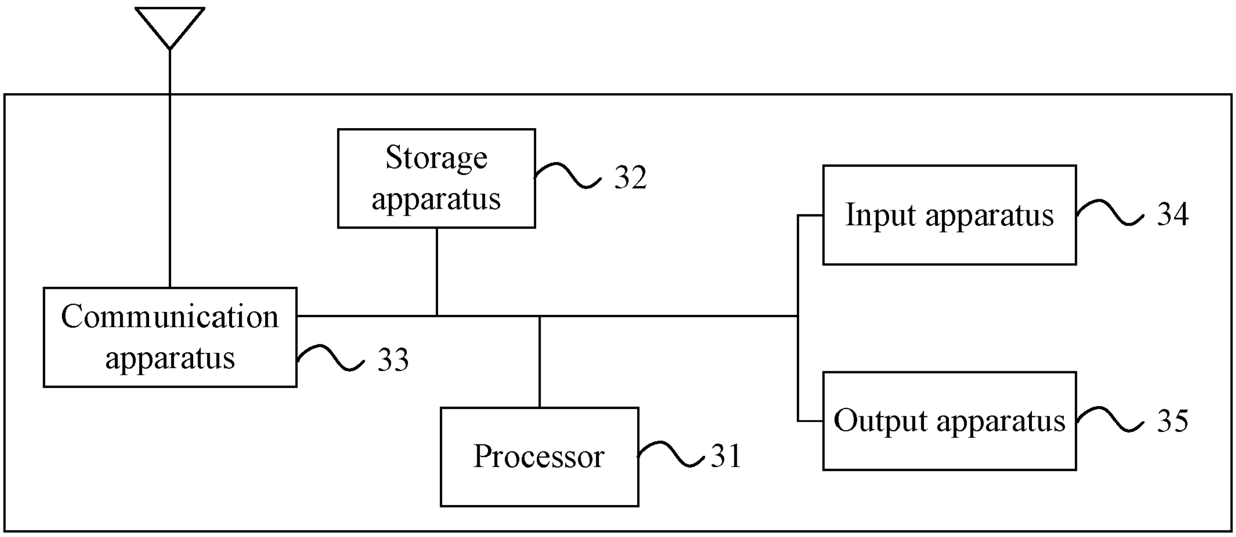
Storage apparatus
32
Input apparatus
34
Communication apparatus
33
Output apparatus
35
Processor
31

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **BINGZHE WU et al.** SRPGAN: Perceptual Generative Adversarial Network for Single Image Super Resolution. *arXiv:1712.05927*, 2017